# EUROPEAN PATENT SPECIFICATION

(11) **EP 2 830 177 B1**
(45) Date of publication and mention of the grant of the patent: **30.03.2016**
(21) Application number: 13177935.7
(22) Date of filing: 25.07.2013
(51) Int. Cl.: H02H 7/06, H02H 7/08, H02H 3/06

(54) **Sample value based protection system and method for an electrical variable speed doubly fed induction machine**
Abtastwert-basiertes Schutzsystem und -verfahren für eine doppelt eingespeiste Induktionsmaschine mit elektrisch variabler Drehzahl
Procédé et système de protection à base de valeur d'échantillon pour machine à induction à double alimentation à vitesse variable électrique

(43) Date of publication of application: 28.01.2015
(73) Proprietor: ALSTOM Technology Ltd, 5400 Baden (CH)
(72) Inventor: Lloyd, Graeme, STAFFORD, ST16 3HZ (GB); Zou, Li, STAFFORD, ST16 1LL (GB); An, Chang, STAFFORD, ST16 1AN (GB)
(74) Representative: Ahner, Philippe

(56) References cited:
- EP-A1- 2 378 656
- EP-A2- 2 136 075
- US-A- 5 592 393
- INGRAM D M E ET AL: "Test and evaluation system for multi-protocol sampled value protection schemes", 2011 IEEE TRONDHEIM POWERTECH : TRONDHEIM, NORWAY, 19 - 23 JUNE 2011, IEEE, PISCATAWAY, NJ, 19 June 2011 (2011-06-19), pages 1-7, XP032263467, DOI: 10.1109/PTC.2011.6019243 ISBN: 978-1-4244-8419-5
- HONGXING WANG ET AL: "Application of Electronic Transformers in Digital Substation", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 October 2008 (2008-10-12), pages 1-5, XP031404405, ISBN: 978-1-4244-1763-6

## Description

### FIELD OF THE INVENTION

The field of the invention is that of protection of electrical variable speed doubly fed induction machines such as motors and generators. The invention more precisely relates to a protection relay to provide protection for extremely low frequency currents and voltages in the variable speed rotor and in the stator during the initial start-up and braking. The invention can also be applied to any other AC or DC system requiring fast operating protection using sampled values.

### DESCRIPTION OF THE PRIOR ART

Doubly fed electric machines are electric motors or electric generators that have windings on both stationary and rotating parts, where both windings transfer significant power between shaft and electrical system. The stator winding is directly connected to the three-phase grid and the three-phase rotor winding is fed from the grid through a power electronic converter.

The main difficulties when developing relays for the protection of such machines relate to the rotor protection design concerning the dynamic variation of frequency, the extremely low frequency and the effect of the converter power modulation (PWM).

At the moment there is no protection relay available in the market to provide protection for the extremely low frequency currents and voltages in the variable speed rotors (typically 0.1Hz to 6Hz in the rotor when running) and in the stator during the initial start-up and braking (0Hz to 50Hz/60Hz).

Moreover, although there is overcurrent and overvoltage protection built in to the power electronic converters connected to the rotor circuit to protect the converters, there is no dedicated protection for the machine rotor.

Indeed conventional protection relays provide mainly stator protection functions which can provide protection down to typically 5Hz. Some relays can provide protection below the normal frequency range of the standard protection functions. For example an r.m.s. overcurrent start-up protection can be used for low frequencies 2Hz to 10Hz for the stator.

It thus appears that conventional protection relays do not provide protection for very low frequencies. This is due to the fact that the Fourier methods, such as the Discrete Fourier transform (DFT) which is typically used in conventional protection relays, are not adequate to provide fast protection for the low frequency application, as the sampling rate has to be aligned to the fundamental frequency before the Fourier methods can correctly calculate the main PWM frequency component and its harmonics. These Fourier methods indeed rely on a frequency tracking technique which provides for a protection execution rate which slows down with the tracked rotor frequency (which as shown above can be as low as 0.1 Hz during normal running).

Also, conventional protection relays are normally connected to iron cored instrument transformers that are not capable of accurately measuring low frequency signals.

There is thus a need for protection relays not using DFT and frequency tracking that would be capable of achieving fast operating times and capable of connection to instrument transformers capable of measuring accurately low frequency signals, so as to guarantee the safety of the machine in all conditions.

EP 2 378 656 A1 discloses a protection circuit for the rotor-side converter of a double-fed induction generator. EP 2 136 075 A2 mentions the problem of very low frequency rotor currents in such generators. EP 2 136 075 A2 aims at an improved operation of a converter, but is not related to protection.

US 5 592 393 A discloses a protection relay using a constant sampling rate but uses Fourier transform algorithm to extract the fundamental current and voltage phasors.

INGRAM et al.: "Test and evaluation system for multi-protocol sampled value protection schemes", 2011 IEEE TRONDHEIM POWERTECH : TRONDHEIM, NORWAY, 19 - 23 JUNE 2011, IEEE, PISCATAWAY, NJ, 19 June 2011 (2011-06-19) and HONGXING WANG et al.: "Application of Electronic Transformers in Digital Substation", POWER SYSTEM TECHNOLOGY AND IEEE POWER INDIA CONFERENCE, 2008. POWERCON 2008. JOINT INTERNATIONAL CONFERENCE ON, IEEE, PISCATAWAY, NJ, USA, 12 October 2008 (2008-10-12), pages 1-5, disclose protection schemes using non-conventional instrument transformers in combination with merging units.

### SUMMARY OF THE INVENTION

In order to respond to this need, the invention provides according to a first aspect a protection system as defined by appended claim 1.

### DESCRIPTION OF THE DRAWINGS

Other aspects, goals, advantages and features of the invention will appear more clearly on reading the following detailed description of preferred embodiments thereof, given by way of non-limiting example and with reference to the accompanying drawing in which:
- figure 1 is a single line diagram showing a possible embodiment of a protection system according to the invention;
- figure 2 shows time diagrams illustrating a reset timer that holds a trip timer for a set period after the observed quantity falls below a drop-off threshold;
- figure 3 shows time diagrams illustrating multiple pick-ups and drop-offs (chattering) that occur in the presence of a sinusoidal fault for conventional protection relays;
- figure 4 shows time diagrams where chattering is prevented in a protection relay according to the invention.

### DESCRIPTION OF PREFERRED EMBODIMENTS

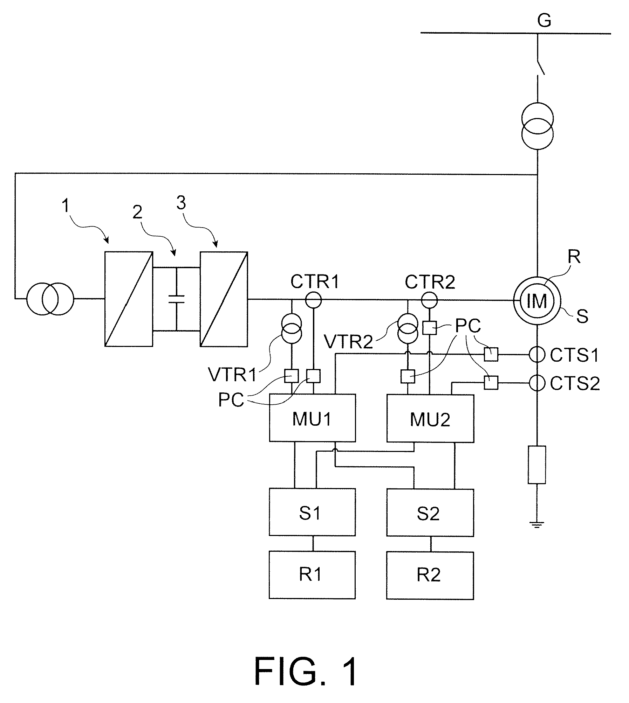

With reference to figure 1, the invention relates to a protection system for an electrical variable speed doubly fed induction machine IM having a stator S and a rotor R.

The induction machine IM has windings on both the stator and the rotor. The n-phase (with n being typically three) stator winding is directly connected to a n-phase grid G and the n-phase rotor winding is fed from the grid G through a power electronic converter which conventionally comprises a grid side converter 1, a DC link 2 and a rotor side converter 3.

The protection system comprises instrument transformers capable of measuring low frequency signals from the rotor and/or stator, in particular rotor and/or stator low frequency signals in the range of 0.1 Hz to 6 Hz. Such instrument transformers, also known as non-conventional instrument transformers, such as optical and Rogowski devices, may comprise a first set of current transformers CTR1 for measuring rotor currents, a second set of current transformers CTS1 for measuring stator currents, and a first set of voltage transformers VTR1 for measuring rotor voltages. Each set comprises n transformers (with n typically equal to three), one being associated to each phase of the rotor or stator.

In an embodiment, the instrument transformers further comprises a second set of voltage transformers for measuring rotor voltages. This second, duplicated, set of voltage transformers might be used so as to provide rotor voltage transformer supervision capability.

It will be contemplated that the protection system of figure 1 is a redundant one, in that it comprises, in addition to rotor current transformers CTR1, stator current transformers CTS1 and rotor voltage transformers VTR1, further rotor current transformers CTR2, further stator current transformers CTS2 and further rotor voltage transformers VTR2.

The protection system further comprises a protection relay R1 which is configured to receive rotor and/or stator measurement values from the instrument transformers CTR1, CTS1, VTR1 (and from the duplicated rotor voltage transformers if applicable) via respective primary converters PC and a merging unit MU1 which is configured to provide the measurements as sampled values at a constant sampling rate.

With such a constant sampling rate, and on the contrary to the frequency tracking technique, the protection execution rate does not slow down with the tracked rotor frequency which can be as low as 0.1 Hz in the rotor during normal running and in the stator during start-up and braking.

As a consequence of fixing the sampling rate, the Fourier algorithms are no longer suitable. To provide fast protection for DC, low frequencies or nominal frequencies, the protection system of the invention comprises at least one protection module that implements a protection algorithm which makes use of rotor or stator sampled measurement values as described in more detail below.

The protection relay R1 can be connected to the instrument transformers CTR1, CTS1, VTR1 (and the duplicated rotor voltage transformers if applicable) by means of respective primary converters PC and a merging unit MU1 which receives and samples the measurement values from the instrument transformers, the sampled measurement values being transmitted to the protection relay which may re-sample the measurement values at a constant sampling rate.

For instance, the protection relay may receive sampled measurement values from the merging unit at 80 samples/cycle (this rate being the one stipulated by the IEC61850-9-2 LE standard). With conventional instrument transformers, a conventional protection relay analogue to digital converter samples at 24/samples per cycle. Therefore, when the relay is used with non conventional instrument transformers and merging units as it is the case in the invention, the protection relay down samples the sampled measurement values at 80 samples/cycle to 24 samples/cycle to be compatible with the existing protection relay algorithms.

In an embodiment, the protection relay R1 comprises an IEC 61850 9-2 LE compliant interface module to communicate with the merging unit MU1. Allocation of the logical nodes for receiving sampled measurement values from the merging unit can be as follows: IA-1, IB-1 and IC-1 for rotor currents (current transformers CTR1), IA-2, IB-2 and IC-2 for stator currents (current transformers CTS1), VA-1, VB-1 and VC-1 for rotor voltages (voltage transformers VTR1), and if applicable VA-2, VB-2 and VC-2 for rotor voltages (voltage transformers VTR2) from a second duplicated set of voltage transformers.

In an embodiment, the protection relay R1 communicates with the merging unit MU1 via an intermediate switch S1, such as an Ethernet switch.

The redundant system of figure 1 comprises two protection relays R1, R2, each connected, via a respective switch S1, S2, to a respective set of instrument transformers (VTR1, CTR1, CTS1, for protection relay R1; VTR2, CTR2, CTS2 for protection relay R2) by means of a respective merging unit MU1, MU2. In addition, as shown on figure 1, each switch S1, S2 may be configured to receive measurement values from both merging units MU1, MU2 so that each protection relay R1, R2 can also receive voltage measurement values from the voltage transformers VTR2 and VTR1 respectively. Each relay R1, R2 therefore receives duplicated voltage measurement values that can be used to provide rotor voltage transformer supervision capability. The merging units MU1, MU2 can also be time synchronized so that the channels are on the same time base, which may be required for some protection functions that use channels from different merging units, for example, voltage transformer supervision.

The protection relay R1 comprises at least one rotor or stator protection module configured to implement a protection algorithm. A protection algorithm can make use of the rotor or stator measurement sampled values (SV). A protection algorithm can also make use of root mean square (RMS) values each calculated from a series of rotor or stator measurement values sampled at said constant sampling rate within a variable size window. Use of sampled values achieves fast operating times, while use of variable size window RMS values achieves better measurement accuracy.

The invention more precisely relates to SV based protection where chattering that may be caused by sinusoidal fluctuations is prevented. Chattering prevention is achieved by extending the scope of use of a reset timer which is provided in the overcurrent protection of some conventional protection relays.

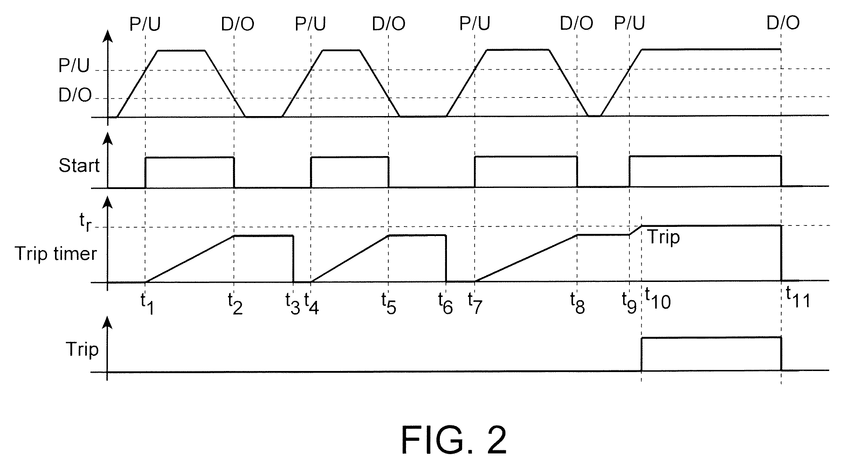

Figure 2 illustrates the characteristics of such a reset timer having a set period of duration Treset. Four timing diagrams are represented on figure 2 which are, from top to bottom, the observed quantity (for instance current), a Start signal, a Trip timer and a Trip signal.

When the observed quantity rises above a first threshold (pick-up threshold P/U) at instants t1, t4, t7, t9, the Start signal is set to a high state, and the Trip timer is started from a pick up state.

The Trip signal is set to a high state at expiration of the trip timer (or stated differently, when a tripping time tᵣ has been reached, instant t10).

When the observed quantity falls below a second threshold (drop-off threshold D/O, which accounts usually for 95 - 98% of the pick-up threshold P/U), the Start signal is reset (instant t2, t5, t8, t11).

At this time the reset timer is started, and the trip timer is paused.

When the observed quantity remains below the second threshold D/O during the set period Treset of the reset timer, at expiration of the reset timer, the trip timer is reset (see instant t3 and t6).

On the contrary, when the observed quantity rises above the first threshold P/U during duration Treset of the reset timer, pause of the trip timer is stopped, and the trip timer restarts running from the timing point it was paused (in other words it is started from a pick up state; instant t9).

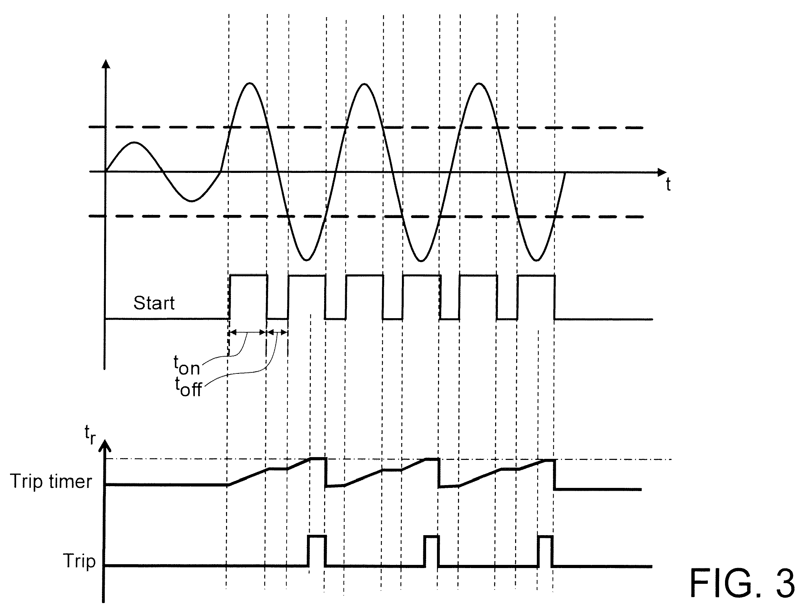

Figure 3 illustrates an observed sinusoidal shaped waveform that causes relay contact chattering and the generation of a large number of events. The top time diagram on figure 3 represents a sinusoidal fault current. The Start signal therefore repeatedly picks up (high state during tₒₙ) and drops off (reset state during t_{off}) in accordance with the fluctuation of the sampled values of the fault current. As an illustrative example, a reset timer is considered for the trip timer with a set period Treset greater than t_{off}.

The Trip signal and the relay contact follow the same pattern as the Start Signal if the protection module is set to instantaneous trip. They follow a similar periodic pattern, as evidenced by figure 3, if a reset timer for holding the trip timer is used (the period depending upon the set period Treset and the duration of the trip timer).

This problem is referred to as 'chattering'. Moreover, an event record is generated every time the Start signal or the Trip signal changes state. Therefore a large amount of events will be generated by chattering, which phenomenon is known as 'event avalanche'. When the signal frequency is high (e.g. 50Hz), many events are generated in a short period of time.

In order to prevent chattering for sinusoidal waveforms, the protection modules of the system according invention uses a reset timer that not only holds the trip timer but also holds both the Start signal and the Trip signals.

The invention thereby relates to a protection system comprising a protection relay having at least one protection module configured to detect faults from sampled rotor or stator measurement values received from instrument transformers.

The protection module is further configured to issue a protection start signal and a protection trip signal which can each be either in a reset state or in a set state.

In an embodiment, a fault is detected when a plurality of consecutive samples, for instance 3 consecutive samples, of the rotor or stator measurements values are above (in case of over-protection), or respectively below (in case of under-protection), a first threshold (pick-up threshold in case of over-protection). This prevents maloperations due to transient fluctuations.

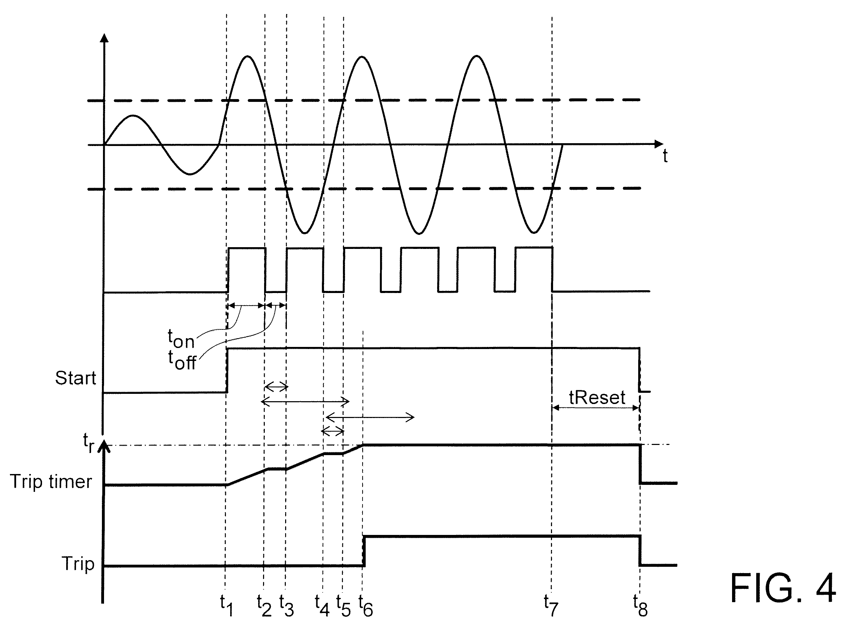

End of a fault is detected when samples of the rotor or stator measurements values fall below (in case of over-protection), or respectively rise above (in case of under-protection), a second threshold (drop-off threshold). For the sake of clarity, the first and second thresholds are equal on figure 4. But these thresholds may be different, with the second threshold accounting for a fraction of the first threshold, such as 95-98% of the first threshold.

With reference to figure 4, when a fault is detected (at instants t1, t3, t5), the protection module sets the protection start signal "Start" in its set state (for instance in the high state) and starts a trip timer. By starting of the trip timer, it is meant that the trip timer starts running from t1 and resumes from its current value at t3 and t5 which is after a pause state.

The protection module is further configured to set the protection trip signal "Trip" in its set state (for instance high state, at t6 on figure 4) when the trip timer has expired (in other words when the tripping time tᵣ has been reached).

The protection module is further configured to start a reset timer having a set period tReset, and to pause the trip timer, when the sampled values fall below (in case of over-protection) or rise above (in case of under-protection) the drop-off threshold (at t2, t4, t7; when detection of the fault ends).

When no new fault is detected during running of the reset timer before its expiration, each of the protection start signal and the protection trip signal is held in its current state, and the trip timer remains paused. In the example of figure 4, such holding and pause occur in particular within the following time intervals: t2-t3, t4-t5, t7-t8.

When a new fault is detected before expiration of the reset timer, the protection module stops the pause of the trip timer. In other words, the trip timer is restarted from the timing point where it was paused. This occurs at instants t3 and t5 on figure 4.

When the reset timer expires, with no new fault being detected since its start, the protection start signal and the protection trip signal are reset into their reset state, and the trip timer is reset. This occurs at instant t8 on figure 4.

When, as shown on figure 4, the set period tReset of the reset timer is longer than each of the non-faulty periods t_{off}, the protection start signal is maintained is its set state and thereby does not repeatedly pick up and drop off in accordance with the sinusoidal fault. Correspondingly, once the trip timer has expired, the protection trip signal is maintained in its set state (period from t6 to t8). In the same manner, the trip timer is paused and does not reset at each non faulty-period.

Hence in a preferred embodiment, the reset timer has a set period which is larger than half the cycle period of the lowest frequency (usually 0,1 Hz)of the frequency range in which the protection relay operates, which corresponds to the longest possible non-faulty period t_{off} on figure 4. As a consequence, the protection start signal and the protection trip signal do not reset until the sinusoidal fault has been cleared. This also ensures that the protection can effectively trip, whereas it may never trip if the set period were to be lower than the smallest possible non-faulty-period.

Amongst possible protection modules that can use as inputs raw samples of rotor or stator measurement values are for instance a stator overcurrent protection module, a rotor overcurrent protection module, or a rotor overvoltage protection module.

The rotor overcurrent protection module is configured to select a rotor current transformer source IA-1, IB-1 or IC-1 for receiving rotor current measurement values, and to implement a rotor overcurrent protection function that samples the current measurement values from the selected source at a constant rate, and makes use of these raw samples to provide for rotor overcurrent protection implementing the above presented reset timer scheme for chattering prevention.

In the same manner, the stator overcurrent protection module is configured to select a stator current transformer source IA-2, IB-2 or IC-2 for receiving stator current measurement values, and to implement a stator overcurrent protection function that samples the stator current measurement values from the selected source at a constant rate, and makes use of these raw samples to provide for stator overcurrent protection implementing the above presented reset timer scheme for chattering prevention.

The rotor overvoltage protection module is configured to receive rotor voltage measurement values from the three sources VA-1, VB-1 and VC-1, and to implement a rotor voltage protection function that samples the rotor voltage measurement values at a constant rate, and makes use of these raw samples to provide for rotor overvoltage protection implementing the above presented reset timer scheme for chattering prevention.

These protection modules ensure protection for frequencies in the range of 0Hz (DC) to 70Hz during the induction machine IM start-up, braking and normal running.

In an embodiment, as any degradation in the measurement or transmission of measurement values may result in the protection modules of the protection relay not operating correctly, a quality flag is associated with each sampled measurement value so that questionable data may be detected and the protection relay may adapt the behavior of the protection modules according to the quality flags.

As for the IEC 61850-9-2 LE protocol, a quality flag may have three states "Good", "Invalid" or "Questionable". For protection modules to work correctly, all the necessary sampled values should have Good quality. Samples that have an Invalid or Questionable quality could result in unacceptable performance from the protection modules. Hence reception of an Invalid or Questionable flag may result in freezing and/or in inhibiting a protection module.

The way that the protection relay treats questionable data is user configurable. However, the default setting can be changed to "Trust Questionable Data".

The protection system described above has the following advantages.

Fast protection is provided for DC, low frequencies or nominal frequencies using sampled values and fixed sampling rate.

The count strategy used before starting the trip timer prevents maloperations due to transient fluctuations.

Use of the reset timer that not only holds the trip timer but also the Start and Trip signals prevents chattering.

Both rotor and stator of a variable speed doubly fed induction motors and generators are protected from damaging rotor and stator faults such as overcurrents and overvoltages caused by phase and earth faults during normal running, the start-up and braking in both motor and generator modes.

Maximum protection availability is achieved with redundant non conventional instrument transformers (NCITs), primary converters, merging units and protection relays.

Use of NCITs has particular benefits for generator applications. Conventional generator current transformers (CTs) can physically be very large whereas NCITs are much smaller and can measure very large currents more accurately. Also, the X/R ratio of generator fault currents can be very high causing saturation with conventional CTs whereas NCITs do not suffer from saturation and so provide a more accurate linear output.

An open standard (IEC61850 9-2 LE) can be used to interface the protection relay with the merging units and the NCITs making integration of different vendors products easier.

Communications between the merging unit and the protection relay can use Ethernet fiber optic communications instead of copper wiring used with conventional CT wiring. Security is enhanced by the use of fiber optic Ethernet connections for any links which run outside of a single local cabinet, such that there are no long, cross-site runs of copper-based communications. This eliminates the risk of induced interference, thereby boosting both security and dependability.

The invention is not limited to the above-described protection system, but also extends to a method implemented by such a protection system, and in particular to a method for protecting an electrical variable speed doubly fed induction machine having a stator and a rotor, comprising, at a protection relay, the steps of:
- detecting faults from rotor or stator measurement values received from instrument transformers capable of measuring low frequency signals from the rotor and/or the stator having a frequency in the range of 0.1 Hz to 6 Hz, a fault being detected when said measurement values cross a first threshold and end of the fault being detected when said measurement values cross a second threshold,
- issuing a protection start signal and a protection trip signal which can each be either in a reset state or in a set state,
- when a fault is detected, setting the protection start signal in its set state and starting a trip timer,
- setting the protection trip signal in its set state when the trip timer is expired,
- starting a reset timer and pausing the trip timer when detection of the fault ends,
- as long as no new fault is detected before expiration of the reset timer, holding each of the protection start signal and the protection trip signal in its current state,
- as long as no new fault is detected, at expiration of the reset timer setting the protection start signal and the protection trip signal in their reset states and performing reset of the trip timer,
- upon detection of a new fault before expiration of the reset timer, stopping pause of the trip timer.

## Claims

1. A protection system for an electrical variable speed doubly fed induction machine (IM) having a stator (S) and a rotor (R), **characterized in that** it comprises instrument transformers (CTR1, CTR2, CTS1, CTS2, VTR1, VTR2) capable of measuring low frequency signals from the rotor and/or the stator having a frequency in the range of 0.1 Hz to 6 Hz, and a protection relay having at least one protection module configured:
- to detect a fault when rotor or stator measurement values received from the instrument transformers exceed a first threshold and to end detection of the fault when said measurement values cross a second threshold,
- to issue a protection start signal (Start) and a protection trip signal (Trip) each being either in a reset state or in a set state,
- when a fault is detected, to set the protection start signal (Start) in its set state and to start a trip timer (Trip timer),
- to set the protection trip signal (Trip) in its set state when the trip timer (Trip timer) is expired,
- to start a reset timer (tReset) and to pause the trip timer when detection of the fault ends,
- as long as no new fault is detected before expiration of the reset timer (tReset), to hold each of the protection start signal (Start) and the protection trip signal (Trip) in its current state,
- as long as no new fault is detected, at expiration of the reset timer (tReset), to reset the protection start signal (Start) and the protection trip signal (Trip) in their reset states and to reset the trip timer,
- when a new fault is detected before expiration of the reset timer (tReset), to stop pause of the trip timer (Trip timer).

2. The protection system of claim 1, wherein the protection system further comprises primary converters (PC) and a merging unit (MU1, MU2) configured to provide the rotor and/or stator measurement values received from the instrument transformers as sampled values at a constant sampling rate to the protection relay.

3. The protection system of claim 2, wherein the at least one protection module is configured to detect a fault when a plurality of consecutive samples of the rotor or stator measurements values are above in case of over-protection, or respectively below in case of under-protection, the first threshold.

4. The protection system of claim 3, wherein the at least one protection module is configured in such way that a fault is no more detected when samples of the rotor or stator measurements values fall below in case of over-protection, respectively rise above in case of under-protection, the second threshold.

5. The protection system of claim 4, wherein the at least one protection module is configured to detect no new fault during running of the reset timer when the samples of the rotor or stator measurements values remain below in case of over-protection, respectively above in case of under-protection, the second threshold.

6. The protection system of any one of claims 4-5, wherein the second threshold is a percentage of the first threshold.

7. The protection system of any one of claims 1-6, wherein the protection relay is configured to operate over a frequency range having a lower frequency and wherein the set timer is larger than half the cycle period of said lower frequency.

8. The protection system of any one of claims 1-7, wherein the instrument transformers comprise a first set of current transformers (CTR1) for measuring rotor currents, a second set of current transformers (CTS1) for measuring stator currents, and at least one set of voltage transformers (VTR1) for measuring rotor voltages.

9. The protection system of any one of claims 1-8, wherein said at least one protection module comprises a stator overcurrent protection module and/or a rotor overcurrent protection module and/or a rotor overvoltage protection module.

10. The protection system of any one of claims 1-9, wherein the protection relay (R1, R2) is connected to the instrument transformers by means of primary converters (PC) and of a merging unit (MU1, MU2), and wherein the protection relay further comprises an IEC 61850-9-2 LE compliant interface module to communicate with the merging unit.

11. A method for protecting an electrical variable speed doubly fed induction machine (IM) having a stator (S) and a rotor (R), **characterized in that** it comprises, at a protection relay (R1, R2), the steps of:
- detecting faults from rotor or stator measurement values received from instrument transformers (CTR1, CTR2, CTS1, CTS2, VTR1, VTR2) capable of measuring low frequency signals from the rotor and/or the stator having a frequency in the range of 0.1 Hz to 6 Hz, a fault being detected when said measurement values cross a first threshold and end of the fault being detected when said measurement values cross a second threshold,
- issuing a protection start signal (Start) and a protection trip signal (Trip) which can each be either in a reset state or in a set state,
- when a fault is detected, setting the protection start signal (Start) in its set state and starting a trip timer (Trip timer),
- setting the protection trip signal (Trip) in its set state when the trip timer is expired,
- starting a reset timer (tReset) and pausing the trip timer when detection of the fault ends,
- as long as no new fault is detected before expiration of the reset timer (tReset), holding each of the protection start signal (Start) and the protection trip signal (Trip) in its current state,
- as long as no new fault is detected, at expiration of the reset timer (tReset) setting the protection start signal (Start) and the protection trip signal (Trip) in their reset states and performing reset of the trip timer (Trip timer),
- upon detection of a new fault before expiration of the reset timer (tReset), stopping pause of the trip timer (Trip timer).

## Patentansprüche

1. Schutzsystem für eine elektrische, doppelt gespeiste Induktionsmaschine (IM) mit variabler Geschwindigkeit und mit einem Stator (S) und einem Rotor (R), **dadurch gekennzeichnet, dass** es Messwandler (CTR1, CTR2, CTS1, CTS2, VTR1, VTR2) umfasst, die dazu in der Lage sind, niederfrequente Signale des Rotors und/oder des Stators zu messen, deren Frequenz im Bereich von 0.1 Hz bis 6 Hz liegt, und ein Schutzrelais, das mindestens ein Schutzmodul hat, welches so konfiguriert ist, dass es:
- einen Fehler erfasst, wenn Rotor- oder Statormesswerte, empfangen von den Messwandlern, eine erste Schwelle überschreiten, und die Fehlererfassung beendet, wenn diese Messwerte eine zweite Schwelle überschreiten,
- ein Schutzstartsignal (Start) und ein Schutzauslösersignal (Auslöser) ausgibt, wobei jedes entweder in einem Reset-Zustand oder in einem Set-Zustand ist,
- wenn ein Fehler erfasst wird, das Schutzstartsignal (Start) in dessen Set-Zustand versetzt und eine Auslöserzeitschaltung (Auslöserzeitschaltung) startet,
- das Schutzauslösersignal (Auslöser) in dessen Set-Zustand versetzt, wenn die Auslöserzeitschaltung (Auslöserzeitschaltung) abgelaufen ist,
- eine Reset-Zeitschaltung (tReset) startet und die Auslöserzeitschaltung unterbricht, wenn die Fehlererfassung endet,
- solange kein neuer Fehler erfasst wird vor Ablauf der Reset-Zeitschaltung (tReset), das Schutzstartsignal (Start) und das Schutzauslösersignal (Auslöser) in ihren jeweiligen bestehenden Zuständen hält,
- solange kein neuer Fehler erfasst wird, bei Ablauf der Reset-Zeitschaltung (tReset) das Schutzstartsignal (Start) und das Schutzauslösersignal (Auslöser) in ihre Reset-Zustände zurücksetzt und die Auslöserzeitschaltung zurücksetzt,
- wenn ein neuer Fehler erfasst wird vor Ablauf der Reset-Zeitschaltung (tReset), die Unterbrechung der Auslöserzeitschaltung (Auslöserzeitschaltung) beendet.

2. Schutzsystem nach Anspruch 1, wobei das Schutzsystem ferner primäre Umrichter (PC) und eine Mischeinheit (MU1, MU2) umfasst mit einer derartigen Konfiguration, dass die von den Messwandlern empfangenen Rotor- und/oder Statormesswerte als Abtastwerte bei einer konstanten Abtastrate dem Schutzrelais bereitgestellt werden.

3. Schutzsystem nach Anspruch 2, wobei das mindestens eine Schutzmodul so konfiguriert ist, dass es einen Fehler erfasst, wenn eine Mehrzahl von aufeinanderfolgenden Abtastungen der Rotor- oder Statormesswerte im Fall von Überschutz über oder im Fall von Unterschutz unter der ersten Schwelle liegt.

4. Schutzsystem nach Anspruch 3, wobei das mindestens eine Schutzmodul dergestalt konfiguriert ist, dass ein Fehler nicht mehr erfasst wird, wenn Abtastungen der Rotor- oder Statormesswerte die zweite Schwelle im Fall von Überschutz über- bzw. im Fall von Unterschutz unterschreiten.

5. Schutzsystem nach Anspruch 4, wobei das mindestens eine Schutzmodul so konfiguriert ist, dass es keinen neuen Fehler erfasst während des Ablaufs der Reset-Zeitschaltung, wenn die Abtastungen der Rotor- oder Statormesswerte im Fall von Überschutz über oder im Fall von Unterschutz unter der zweiten Schwelle bleiben.

6. Schutzsystem nach einem der Ansprüche 4-5, wobei die zweite Schwelle ein Prozentsatz der ersten Schwelle ist.

7. Schutzsystem nach einem der Ansprüche 1-6, wobei das Schutzrelais so konfiguriert ist, dass es über einem Frequenzbereich funktioniert, der eine untere Frequenz hat, und wobei die gestellte Zeitschaltung größer als die halbe Periodenzeit dieser unteren Frequenz ist.

8. Schutzsystem nach einem der Ansprüche 1-7, wobei die Messwandler einen ersten Satz Stromwandler (CTR1) zur Messung von Rotorströmen, einen zweiten Satz Stromwandler (CTS1) zur Messung von Statorströmen, und mindestens einen Satz Spannungstransformatoren (VTR1) zur Messung von Rotorspannungen umfassen.

9. Schutzsystem nach einem der Ansprüche 1-8, wobei das mindestens eine Schutzmodul ein Statorüberstromschutzmodul und/oder ein Rotorüberstromschutzmodul und/oder ein Rotorüberspannungsschutzmodul umfasst.

10. Schutzsystem nach einem der Ansprüche 1-9, wobei das Schutzrelais (R1, R2) mit den Messwandlern verbunden ist durch primäre Umrichter (PC) und eine Mischeinheit (MU1, MU2), und wobei das Schutzrelais ferner ein Schnittstellenmodul umfasst, das mit IEC 61850-9-2 LE konform ist, um mit der Mischeinheit zu kommunizieren.

11. Verfahren zum Schutz einer elektrischen, doppelt gespeisten Induktionsmaschine (IM) mit variabler Geschwindigkeit und mit einem Stator (S) und einem Rotor (R), **dadurch gekennzeichnet, dass** es bei einem Schutzrelais (R1, R2) folgende Schritte umfasst:
- Erfassen von Fehlern von Rotor- oder Statormesswerten, empfangen von Messwandlern (CTR1, CTR2, CTS1, CTS2, VTR1, VTR2), die in der Lage sind, niederfrequente Signale von dem Rotor und/oder dem Stator zu messen, die eine Frequenz im Bereich von 0.1 Hz bis 6 Hz haben, wobei ein Fehler erfasst wird, wenn diese Messwerte eine erste Schwelle überschreiten und das Ende des Fehlers erfasst wird, wenn diese Messwerte eine zweite Schwelle überschreiten,
- Ausgeben eines Schutzstartsignals (Start) und eines Schutzauslösersignals (Auslöser), wobei jedes entweder in einem Reset-Zustand oder in einem Set-Zustand sein kann,
- wenn ein Fehler erfasst wird, Versetzen des Schutzstartsignals (Start) in dessen Set-Zustand und Starten der Auslöserzeitschaltung (Auslöserzeitschaltung),
- Versetzen des Schutzauslösersignals (Auslöser) in dessen Set-Zustand, wenn die Auslöserzeitschaltung (Auslöserzeitschaltung) abgelaufen ist,
- Starten einer Reset-Zeitschaltung (tReset) und Unterbrechen der Auslöserzeitschaltung, wenn die Fehlererfassung endet,
- solange kein neuer Fehler erfasst wird vor Ablauf der Reset-Zeitschaltung (tReset), Halten des Schutzstartsignals (Start) und des Schutzauslösersignals (Auslöser) in ihren jeweiligen bestehenden Zuständen,
- solange kein neuer Fehler erfasst wird, bei Ablauf der Reset-Zeitschaltung (tReset) Zurücksetzen des Schutzstartsignals (Start) und des Schutzauslösersignals (Auslöser) in ihre Reset-Zustände und Zurücksetzen der Auslöserzeitschaltung (Auslöserzeitschaltung),
- bei Erfassung eines neuen Fehlers vor Ablauf der Reset-Zeitschaltung (tReset), Beenden der Unterbrechung der Auslöserzeitschaltung (Auslöserzeitschaltung).

## Revendications

1. Système de protection pour une machine à induction à double alimentation à vitesse variable électrique (IM) comprenant un stator (S) et un rotor (R), **caractérisé en ce qu'**il comprend des transformateurs de mesure (CTR1, CTR2, CTS1, CTS2, VTR1, VTR2) capables de mesurer des signaux basse fréquence provenant du rotor et/ou du stator, ayant une fréquence dans la plage de 0,1 Hz à 6 Hz, et un relais de protection comprenant au moins un module de protection configuré :
- pour détecter un défaut quand des valeurs de mesure de rotor ou de stator reçues à partir des transformateurs de mesure dépassent un premier seuil et pour terminer la détection du défaut quand lesdites valeurs de mesure franchissent un deuxième seuil,
- pour émettre un signal de début de protection (Start) et un signal de déclenchement de protection (Trip), chacun étant soit dans un état réinitialisé soit dans un état activé,
- quand un défaut est détecté, pour régler le signal de début de protection (Start) dans son état activé et pour démarrer un temporisateur de déclenchement (Trip timer),
- pour régler le signal de déclenchement de détection (Trip) dans son état activé quand le temporisateur de déclenchement (Trip timer) a expiré,
- pour démarrer un temporisateur de réinitialisation (tReset) et pour interrompre le temporisateur de déclenchement quand la détection du défaut se termine,
- aussi longtemps qu'aucun nouveau défaut n'est détecté avant l'expiration du temporisateur de réinitialisation (tReset), pour maintenir chacun du signal de début de protection (Start) et du signal de déclenchement de protection (Trip) dans son état actuel,
- aussi longtemps qu'aucun nouveau défaut n'est détecté, à l'expiration du temporisateur de réinitialisation (tReset), pour réinitialiser le signal de début de protection (Start) et le signal de déclenchement de protection (Trip) dans leurs états réinitialisés et pour réinitialiser le temporisateur de déclenchement,
- quand un nouveau défaut est détecté avant l'expiration du temporisateur de réinitialisation (tReset), pour arrêter l'interruption du temporisateur de déclenchement (Trip timer).

2. Système de protection selon la revendication 1, dans lequel le système de protection comprend en outre des convertisseurs primaires (PC) et une unité de fusion (MU1, MU2) configurés pour fournir les valeurs de mesure de rotor et/ou de stator reçues à partir des transformateurs de mesure comme des valeur échantillonnées à une cadence d'échantillonnage constante au relais de protection.

3. Système de protection selon la revendication 2, dans lequel l'au moins un module de protection est configuré pour détecter un défaut quand une pluralité d'échantillons consécutifs des valeurs de mesure de rotor ou de stator sont au-dessus en cas de surprotection, ou respectivement au-dessous en cas de sous-protection, du premier seuil.

4. Système de protection selon la revendication 3, dans lequel l'au moins un module de protection est configuré de telle manière qu'un défaut ne soit plus détecté quand des échantillons des valeurs de mesure de rotor ou de stator tombent au-dessous en cas de surprotection, respectivement montent au-dessus en cas de sous-protection, du deuxième seuil.

5. Système de protection selon la revendication 4, dans lequel l'au moins un module de protection est configuré pour détecter aucun nouveau défaut durant le fonctionnement du temporisateur de réinitialisation quand les échantillons des valeurs de mesure de rotor ou de stator restent au-dessous en cas de surprotection, respectivement au-dessus en cas de sous-protection, du deuxième seuil.

6. Système de protection selon l'une quelconque des revendications 4 à 5, dans lequel le deuxième seuil est un pourcentage du premier seuil.

7. Système de protection selon l'une quelconque des revendications 1 à 6, dans lequel le relais de protection est configuré pour fonctionner sur une plage de fréquences ayant une fréquence inférieure et dans lequel le temporisateur d'activation est supérieur à la moitié de la période de cycle de ladite fréquence inférieure.

8. Système de protection selon l'une quelconque des revendications 1 à 7, dans lequel les transformateurs de mesure comprennent un premier ensemble de transformateurs de courant (CTR1) pour mesurer des courants de rotor, un deuxième ensemble de transformateurs de courant (CTS1) pour mesurer des courants de stator, et au moins un ensemble de transformateurs de tension (VTR1) pour mesurer des tensions de rotor.

9. Système de protection selon l'une quelconque des revendications 1 à 8, dans lequel ledit au moins un module de protection comprend un module de protection de surintensité de stator et/ou un module de protection de surintensité de rotor et/ou un module de protection de surtension de rotor.

10. Système de protection selon l'une quelconque des revendications 1 à 9, dans lequel le relais de protection (R1, R2) est connecté aux transformateurs de mesure au moyen de convertisseurs primaires (PC) et d'une unité de fusion (MU1, MU2) et dans lequel le relais de protection comprend en outre un module d'interface conforme à IEC 61850-9-2 LE pour communiquer avec l'unité de fusion.

11. Procédé de protection d'une machine à induction à double alimentation à vitesse variable électrique (IM) comprenant un stator (S) et un rotor (R), **caractérisé en ce qu'**il comprend, au niveau d'un relais de protection (R1, R2), les étapes suivantes :
- la détection de défauts à partir de valeurs de mesure de rotor ou de stator reçues à partir de transformateurs de mesure (CTR1, CTR2, CTS1, CTS2, VTR1, VTR2) capables de mesurer des signaux basse fréquence provenant du rotor et/ou du stator, ayant une fréquence dans la plage de 0,1 Hz à 6 Hz, un défaut étant détecté quand lesdites valeurs de mesure franchissent un premier seuil et une fin du défaut étant détectée quand lesdites valeurs de mesure franchissent un deuxième seuil,
- l'émission d'un signal de début de protection (Start) et un signal de déclenchement de protection (Trip), chacun étant soit dans un état réinitialisé soit dans un état activé,
- quand un défaut est détecté, le réglage du signal de début de protection (Start) dans son état activé et le démarrage d'un temporisateur de déclenchement (Trip timer),
- le réglage du signal de déclenchement de protection (Trip) dans son état activé quand le temporisateur de déclenchement a expiré,
- le démarrage d'un temporisateur de réinitialisation (tReset) et l'interruption du temporisateur de déclenchement quand la détection du défaut se termine,
- aussi longtemps qu'aucun nouveau défaut n'est détecté avant l'expiration du temporisateur de réinitialisation (tReset), le maintien de chacun du signal de début de protection (Start) et du signal de déclenchement de protection (Trip) dans son état actuel,
- aussi longtemps qu'aucun nouveau défaut n'est détecté, à l'expiration du temporisateur de réinitialisation (tReset), le réglage du signal de début de protection (Start) et du signal de déclenchement de protection (Trip) dans leurs états réinitialisés et l'exécution de la réinitialisation du temporisateur de déclenchement (Trip timer),
- à la détection d'un nouveau défaut avant l'expiration du temporisateur de réinitialisation (tReset), l'arrêt de l'interruption du temporisateur de déclenchement (Trip timer).
